# EUROPEAN PATENT SPECIFICATION

(11) **EP 4 264 018 B1**
(45) Date of publication and mention of the grant of the patent: **19.11.2025**
(21) Application number: 22702404.9
(22) Date of filing: 14.01.2022
(51) Int. Cl.: F01D 25/28

(54) **CONTINUOUS FLOW ENGINE SKID COMPONENT SYSTEM**
GLEITKOMPONENTENSYSTEM EINES MOTORS MIT KONTINUIERLICHER STRÖMUNG
SYSTÈME DE COMPOSANT DE PATIN DE MOTEUR À ÉCOULEMENT CONTINU

(30) Priority: 08.02.2021 EP 21155733
(43) Date of publication of application: 25.10.2023
(73) Proprietor: Siemens Energy Global GmbH & Co. KG, 81739 München (DE)
(72) Inventor: GRAICHEN, Andreas, 60211 Norrköping (SE)
(86) International application number: PCT/EP2022/050785
(87) International publication number: WO 2022/167199

(56) References cited:
- WO-A1-2014/016555
- US-A1- 2019 299 522

## Description

The present invention refers to a continuous flow engine skid component providing improved benefits and characteristics. Furthermore, the present invention refers to a method to manufacture such continuous flow engine skid component. Additionally, the present invention refers to a use of 3D printing to manufacture such inventive continuous flow engine skid component. Furthermore, the present invention refers to a computer program product enabling to realize the manufacturing of such continuous flow engine skid component.

For example, WO 2014016555 A1 refers to a base made of a composite material for supporting a generator. For example, US 2019/0299522 A1 refers to a nozzle for depositing fiber-reinforced polymer having a radiative chamber comprising an outer structure of a nozzle end; a cooling chamber coupled to the outer structure; and a filament guide tube extending into the cooling chamber.

Continuous flow engine skid components are part of continuous flow engine skids. Also, such continuous flow engine skid can be manufactured as a whole resulting in the complete continuous flow engine skid being the continuous flow engine skid component. Such continuous flow engine skid represents a frame like structure being able to fixate a continuous flow engine in a specified position, for example, during manufacturing, transport or utilization. Furthermore, such continuous flow engine skid can provide further functions like air supply or the like being already included in such skid. Herein, such function can be integrated as inseparable component or can be attached as separable component. Corresponding skids utilized to provide such fixation typically consist of metal like especially steel to provide a reliable fixation. In this context, the corresponding skid component needs to withstand, for example, the vibrations during start up processes and load changes. Simultaneously, the sheer weight of such continuous flow engine requires a very stable structure to provide the required stability of decades of use. However, such skid components are difficult to be specifically adapted to the specific application case. Herein, the specific stress for a skid component not only results from the specific type of continuous flow engine. Ideally, the specific skid component should be adapted to the specific use of such continuous flow engine, for example, whether it is utilized in a base load setting running essentially continuously or with a peak utilization running from peak to peak with essentially no high stress in between. Furthermore, it would be beneficial to adapt the corresponding skid component to the specific localization including vibrations in the corresponding facility, potential influences like earthquakes, or the like. However, to provide such specifically tailored skid component is very difficult as it has to be relied on standard elements and specific local requirements are hard to meet without monitoring the specific location for a while.

These problems are solved by the products and methods as disclosed hereafter and in the claims. Further beneficial embodiments are disclosed in the dependent claims and the further description. These benefits can be used to adapt the corresponding solution to specific needs or to solve further problems.

According to one aspect the present invention refers to a continuous flow engine skid component, wherein the continuous flow engine skid component is part of a continuous flow engine skid or is adapted to be part of a continuous flow engine skid, wherein the continuous flow engine skid is adapted to fixate a continuous flow engine in a specified position, wherein the continuous flow engine skid component contains, preferably consists of, a matrix material, wherein the matrix material contains an nonmetal inorganic or organic matrix, wherein the matrix material is a concrete material, a gypsum material, a geopolymer material, or an organic matrix material containing at least an inorganic or organic filler. Surprisingly, it was noted that manufacturing such continuous flow engine skid component at least partially from such matrix material is surprisingly beneficial. Especially, it was noted that even highly stressed parts of a continuous flow engine unit are very easily manufactured according to specific needs from such matrix material and withstand, for example, even the high mechanical stress occurring during utilization of the continuous flow engine. This is very surprising taking into account the mechanical properties of such material and the high mechanical stress resulting from utilizing such continuous flow engine is withstood while improved properties compared to conventional steel skids can be easily achieved. Herein, switching from the established metal based materials utilized in such context is a significant step contradicting the usual handling in such context. As the skid component of such continuous flow engine represent an essential, however, relatively minor part of such continuous flow engine unit utilized for, for example, power generation. The risks in such context a considered being far exceeding, for example, savings possible from such step or benefits obtained by further adapting the skid according to the specific needs.

Also, changing a transportation skid from such established material to the inventive matrix material is not obvious for the skilled person as a well working combination of standardized metal skids and adaptions of the transport conditions like special vibration protection elements or the like is effectively utilized. However, surprisingly it was noted that a reliable transportation skid can be manufactured using the matrix material, wherein the tailoring of the skid allows to effectively fixate the continuous flow engine during transport and simultaneously reduce the overall size of the unit containing the skid and the continuous flow engine. This allows to, for example, avoid using heavy load transportation or even load such unit into a transport airplane significantly improving the possibilities. While ensuring the same security of the continuous flow engine or even improving it the transport can be simplified, speed up or even be rendered possible in difficult to reach destinations. Also, it becomes possible to avoid, for example, breaking open door frames or the like to place such units in a destined facility while before an opening has to be provided or the continuous flow engine has to be demounted and separately transported inside such facility. Even reducing the size of such opening is a significant benefit, as it allows to reduce or even avoid, for example, to provide an extensive support of the part of the facility like the ceiling of a building. Depending on the statics being required to remove a single pillar in addition can easily result in significant effort to secure the safety.

Summarizing, it was noted that introducing such material provides many additional benefits. For example, it allows to easily tailor the specific properties of such continuous flow engine skid components to the specific application. Herewith, it becomes possible to enable a more demanding utilization and, for example, increase the power output or decrease the safety time when executing load changes. It becomes possible to evaluate the specific situation at the location like vibrations resulting from nearby machines and specifically adapt the continuous flow engine skid component according to such conditions to further improve the characteristics of the continuous flow engine skid components. For example, upon delivery of the gas turbine components corresponding measurements can be executed while the components are received and prepared to specifically tailor the corresponding design. Preferably, during first inspection of such facility a corresponding measurement device is placed on location and continuously delivers corresponding data to a remote database being utilized to optimize the continuous flow engine skid component design in advance.

A continuous flow engine skid component representing only a part of the continuous flow engine skid can directly be attached and transported along the complete continuous flow engine skid. However, it can also be transported separately and provided as continuous flow engine skid component being adapted to be part of a continuous flow engine skid. Providing the specifically adapted engaging elements to fasten the continuous flow engine skid component to the remaining part of the continuous flow engine skid allows to attach such component directly on site. This is especially beneficial while utilizing 3D printing, as it allows to tailor such component based on the local requirements to the desired location with little to no effort based on existing doors and small entries typically burdening the transport and installation. While the specifically adapted engaging elements allow to easily tailor the size accordingly and still provide a reliable and safe fastening during the later use.

The term "continuous flow engine skid" as used herein refers to a frame or comparable structure allowing to fixate a continuous flow engine at the desired location, for example, during transport and/or preferably during utilization of such continuous flow engine. The nonmetal inorganic matrix contains a network providing a matrix structure. Herein, such network is preferably a network structure, a plurality of network structures connected to each other or a network of separate structures extending into each other. Herein, said network of the matrix material provides mechanical stability. Furthermore, it allows to include an additive material into the matrix material. Such additive material can, for example, be utilized as mere filler to decrease the costs of the matrix material or improve the ecological properties of the material be, for example, including easily recyclable and/or renewable materials. Also, such additive material can be functional additives influencing the properties of the matrix material. Such matrix material can be, for example, beneficially selected from concrete materials, gypsum materials, geopolymer materials, or organic matrix materials containing at least an inorganic or organic filler. Such organic filler is typically preferred some plant based filler like cellulose fibers and/or wood based materials like, for example, chipped wood.

According to a further aspect the present invention refers to a method of manufacturing an inventive continuous flow engine skid component, wherein the method of manufacturing contains 3D printing matrix material, wherein the matrix material is a concrete material, a gypsum material, a geopolymer material, or an organic matrix material containing at least an inorganic or organic filler. It was noted that such 3D printing can be very beneficially utilized to process, for example, a concrete material, a gypsum material, a geopolymer material, or an organic matrix material containing at least an inorganic or organic filler to provide such continuous flow engine skid component. Furthermore, it allows to easily provide the continuous flow engine skid component on the demanded site. Instead of transporting huge elements that are manufactured at a distant facility only the 3D printing device and the matrix material is to be transported and allows to directly manufacture a specifically adapted design on site. This is especially beneficial for concrete based skid components. Based on potential damages during transport of such material utilizing such method for such skid component is a significant benefit as corresponding damages have been noted to be especially problematic in such case.

According to a further aspect the present invention refers to a use of 3D printing concrete material to manufacture an inventive continuous flow engine skid component.

According to a further aspect the present invention refers to a computer program product, preferably tangibly embodied in a machine-readable storage medium, including instructions operable to cause a computing entity to provide manufacturing instructions for a 3D matrix printing device to manufacture an inventive continuous flow engine skid component, wherein the computer program product adapts the continuous flow engine skid component according to the specific utilization of the continuous flow engine. Surprisingly, it was noted that it is possible to automatically generate corresponding design data sets and the required manufacturing instructions based on the specific utilization of the continuous flow engine. For example, detailed data regarding the specific location streamed to a remote database from the intended site can be directly processed to adapt the specific design of the continuous flow engine skid component.

To simplify understanding of the present invention it is referred to the detailed description hereafter. Said detailed description further contains beneficial embodiments that can be beneficially realized to further improve the invention and/or adapt the present invention according to specific needs.

According to one aspect the present invention refers to a continuous flow engine skid component as specified above.

It is possible to combines multiple materials to provide the continuous flow engine skid component. However, for typical applications it is preferred that the whole continuous flow engine skid component is manufactured from a matrix material. According to further embodiments it is preferred that the continuous flow engine skid component is consisting of a matrix material. Preferably, such matrix material is a concrete material, a gypsum material, a geopolymer material, or an organic matrix material containing at least an inorganic or organic filler, more preferred a concrete material. Utilizing such materials is surprisingly possible despite their mechanical limitations. Simultaneously, it significantly simplifies the manufacturing process and to even automate it, for example, using 3D concrete printing to provide any desired design.

The term "geopolymer" refers to the solid material known to the skilled person under such name. Typically, it consists of an aluminosilicate material. Such solid structure can be acquired by reacting a precursor preferably provided as powder with alkali hydroxide or alkali silicate. Such geopolymer provides a binding phase consisting of an alkali aluminosilicate gel, with aluminum and silicon linked in a three-dimensional tetrahedral gel framework. Such framework provides a good resistance against dissolution in water.

Such organic matrix material can be, for example, some organic polymer containing a stone powder or cellulose fibers as filler. Typically, it is preferred that such organic matrix matrix also contains additional additives to, for example, increase the UV stability of said organic matrix material.

Such concrete materials or gypsum materials according to further embodiments preferably contain at least one thixotropic agent. Such thixotropic agent influences the rheologic properties of such concrete material or gypsum material. This is especially useful for typical application to provide a lower rheology during printing, wherein the printed material provides in increased rheology to maintain the shape of the printed component until the chemical processes solidify the component.

Furthermore, it was noted that it is typically preferred that the skid component represents a complete skid adapted to be utilized to fixate the continuous flow engine. According to further embodiments it is preferred that the continuous flow engine skid component is a skid adapted to fixate a continuous flow engine in a specified position. Manufacturing a complete skid out of such material allows to increase the possibilities even more and allow to influence and adapt the properties of the continuous flow engine skid component even more. For example, to improve the decoupling of the continuous flow engine from the surroundings to reduce or even prevent the transmission of vibrations of the surroundings to the continuous flow engine. Typically, it is preferred that such skid is not enclosing the continuous flow engine. While it is easily possible to envelop the whole continuous flow engine utilizing, for example, 3D printing concrete such enveloping skid is typically detrimental with regard to its mechanical properties. For example, it can be preferred that less than 50%, more preferred less than 70%, even more preferred less than 80% of the surface of the continuous flow engine is covered by said skid.

It was noted that the inventive method can be especially beneficially utilized to manufacture specific components. According to further embodiments it is preferred that the continuous flow engine skid component is a mounting element, a cover, a noise protection, an exhaust outlet, a cooling medium outlet, a gas vent, a part of an air inlet and/or an air inlet, more preferred a mounting element, a cover, a noise protection, and/or an air inlet. Naturally, it is possible to combine multiple inventive continuous flow engine skid components being different components as specified above like a skid component being a mounting element and a skid component being an air inlet being part of the same skid. However, it is also possible to provide a single continuous flow engine skid component. For example, it was noted that for typical applications it is beneficial to provide mounting elements as inventive continuous flow engine skid components. Corresponding mounting elements provide a very resistant mounting being able to withstand high mechanical stress while being able to be easily adapted and tailored according to the specific needs of the specific continuous flow engine at the corresponding location under the conditions as intended.

Such noise protection can be some sound enclosure surrounding some part of a continuous flow engine generating a significant amount of noise. Herein, such sound enclosure encapsulates the corresponding parts to reduce the overall noise being generated during use of the continuous flow engine. It was noted that the utilization of the inventive matrix materials allows to significantly dampen the corresponding noise enabling a much less stressful and surprisingly even more secure working near such device. In this context, it becomes possible to easily reduce the overall noise to such degree that the communication of operators with each other becomes possible enabling to easily point out problems and the like to avoid dangers.

For example, such part of an air inlet can be a filter casing being adapted to receive a filter like a filter removing sand particles from the air stream.

Such gas vents can be, for example, gas fuel vents, purge gas vents or cooling gas vents. Utilizing the inventive approach even allows to tailor the flow behavior of the corresponding gases and directly adapt the design to respond the specific needs. Like, for example, including dust traps or the like being easy to clean. Also, taking into account the surrounding environment like the available space for some worker to, for example, simply place a ladder and gain access to such dust trap. While this sound trivial, it was noted that the adaption of corresponding accesses based on the surrounding machines and spaces allows to significantly improve the security for workers in such cases.

Furthermore, it was noted that the skid component can beneficially comprise a base plate. According to further embodiments it is preferred that the continuous flow engine skid component contains a base plate containing, preferably consisting of, matrix material. The term "base plate" as used herein refers to a support structure being part of or being attached to the floor or a foundation structure under the continuous flow engine. Such foundation structure can be, for example, introduced into a corresponding hole in the floor, wherein such foundation structure allows to, for example, mechanically decoupled from the surrounding floor to reduce or even prevent the transmission of vibrations or even significant shocks through the ground to the continuous flow engine. Such base plate can essentially provide any possible shape. However, taking into account the inventive use of the matrix material and especially utilizing 3D printing it is possible to, for example, reduce the overall weight and size of such base plate while the required support is still provided. Taking into account the flexible and adaptable shape provided by such manufacturing method allows to save weight by influencing the center of gravity of such base plate by means of, for example, adapting the specific geometrical shape of such structure. Manufacturing such base plate as part of the inventive skid component is surprisingly beneficial, as it allows to provide an overall improved structure with an increased overall stability and higher self-weight decreasing the vibrations during load changes of the continuous flow engine and allowing to reduce vibrations being transmitted to the surroundings. Also, when such skid needs to be attached to, for example, some foundation element or some frame structure it is typically very easy to specifically adapt the shape of such base plate according to the specific needs on the spot. Thus, providing such defined base plate simplifies last moment adaptions to improve the placement of the skid. Surprisingly, this provides the possibility to further reduce vibrations and the like as everything is provided as specifically adapted structure not requiring compensating elements or the like.

Additionally, it was noted that wood materials can be beneficially utilized in the matrix material. According to further embodiments it is preferred that the matrix material contains an additive material, wherein the additive material is wood based material. Naturally, additional additive materials can be included to further influence the characteristics of the matrix material. For example, such wood based material can be wood granulate. It was noted that corresponding materials not only provide the required mechanical properties. It is furthermore possible to provide corresponding skid components with an improved overall ecological footprint and the possibilities of a later recycling. Taking into account the future and how building materials recently being typically utilized it is expected to be very beneficial to introduce such material being easier to be recycled and providing a significantly reduced chance of later problems during disposal.

Furthermore, it was noted that the matrix material, especially the concrete material and gypsum material, can be beneficially reinforced for certain applications. According to further embodiments it is preferred that the matrix material contains a functional additive material, wherein the functional additive material is a reinforcement material, preferably a steel reinforcement material. Utilizing such reinforcement allows to increase the possible applications and vary the characteristics of the skid components within a broader range easily outweighing the increased costs and effort required in this context.

According to further embodiments it is preferred that the matrix material contains an functional additive material, wherein the functional additive material is selected from the group consisting of steel powder, steel flakes, steel fibers or steel wire, preferably steel fibers. Corresponding reinforcements allows to significantly improve the characteristics of the matrix material, like the concrete material or gypsum material, and further tailor its characteristics even when using 3D printing concrete material. It allows to significantly increase the possibilities provided by the inventive skid components and their applications.

Additionally, the inventive skid components are especially beneficially utilized for certain types of continuous flow engines. According to further embodiments it is preferred that the continuous flow engine is a gas continuous flow engine. It was noted that utilizing the inventive skid components for gas turbines is especially useful. Surprisingly, it was noted that the properties of corresponding skid components are especially useful for such applications while commonly utilized skid components of such gas turbines are especially challenging to be adapted and transported to the desired location.

According to a further aspect the present invention refers to a method of manufacturing an inventive continuous flow engine skid component, wherein the continuous flow engine skid component is part of a continuous flow engine skid or is adapted to be part of a continuous flow engine skid, wherein the continuous flow engine skid is adapted to fixate a continuous flow engine in a specified position, wherein the continuous flow engine skid component contains, preferably consists of, a matrix material, wherein the matrix material contains an nonmetal inorganic or organic matrix, wherein the method of manufacturing contains 3D printing matrix material. For example, such 3D printing can be utilized to print a material like a concrete material or a geopolymer material.

Furthermore, it was noted that wood materials can be typically beneficially utilized. According to further embodiments it is preferred that the method contains 3D printing a matrix material containing wood material like wood granulate. It was noted that such materials are especially useful for 3D printing such matrix materials like concrete materials to manufacture an inventive continuous flow engine skid component. Such wood material can be easily introduced in the raw material of such 3D printing process to improve the characteristics of the final product and, for example, improve the ecological properties.

Additionally, it was noted that it is typically beneficial to utilize the inventive method to provide a complete skid. According to further embodiments it is preferred that the method contains 3D printing a skid adapted to fixate a continuous flow engine in a specified position. Providing such complete skid instead of only single skid components to be attached to a skid made separately allows to make best use of the 3D printing process, provides an overall improved stability compared to attaching such specifically tailored elements to a generic skid and allows to automate the complete manufacturing process. Overall, significantly increasing the overall efficiency of the inventive method.

Furthermore, it can be beneficially to include further manufactured parts. According to further embodiments it is preferred that the method contains 3D printing a base plate connected to the skid. Including such base plate in the overall design and to manufacture it along allows to increase the possible characteristics being able to be provided by the inventive continuous flow engine skid component. For example, depending on the weight of the base plate it is possible to influence the overall weight of the skid component and influence the vibrational characteristics. Enabling to provide an even more tailored skid component according to the very specific situation found at the specific site.

Additionally, it was noted that the 3D printing process can be beneficially modified for typical applications. According to further embodiments it is preferred that the method contains changing the matrix material during the 3D printing. For example, it can be switched to a completely different concrete composition at a specific time or the concrete composition can be changed from a composition A to a composition B over a specified time period. For example, it can be switched from a less or non reinforced material utilized for a base plate to a highly reinforced concrete material for highly stressed parts. Also, the amount of the nonmetal inorganic or organic matrix in relation to the total weight of the matrix material can be changed. For example, for less strained parts the amount of the nonmetal inorganic or organic matrix can be decreased while the relative amount of an ecological beneficial filler can be increased.

Furthermore, it was noted that such change of the matrix material can also be changing the amount of an additive during 3D printing. According to further embodiments it is preferred that a relative amount of an additive material like a functional additive material is changed during the 3D printing. The term "relative amount" as used herein refers to the amount in relation to the total amount of the matrix material. For example, the amount of an additive like wood granulate can be changed to be increased in a middle part of the continuous flow engine skid component requiring a lower stability. For example, the amount of a reinforcement material like steel fibers can be increased in mounting parts of the skid component. This allows to specifically tailor the properties of the continuous flow engine skid component according to the specific needs and even combining different characteristics within a single printed continuous flow engine skid component. Correspondingly adapted skid components allow to, for example, decrease or even remove negative properties of the matrix material like the typically lower tensile strength of concrete while avoiding to homogeneously include such additive being unrequired and increasing the overall amount of additive being required to be transported to a location and making local adjustments and adaptions more difficult.

According to a further aspect the present invention refers to a use of 3D printing concrete material to manufacture an inventive continuous flow engine skid component.

According to a further aspect the present invention refers to a computer program product, preferably tangibly embodied in a machine-readable storage medium, including instructions operable to cause a computing entity to provide manufacturing instructions for a 3D concrete printing device to manufacture an inventive continuous flow engine skid component, wherein the computer program product adapts the continuous flow engine skid component according to the specific utilization of the continuous flow engine.

The present invention was only described in further detail for explanatory purposes. However, the invention is not to be understood being limited to these embodiments as they represent embodiments providing benefits to solve specific problems or fulfilling specific needs. Herein, the specific embodiments disclosed above can be utilized separately or, preferably, the features of multiple embodiments are combined. The scope of the protection should be understood to be only limited by the claims attached.

## Claims

1. Continuous flow engine skid component,
wherein the continuous flow engine skid component is part of a continuous flow engine skid or is adapted to be part of a continuous flow engine skid,
wherein the continuous flow engine skid is adapted to fixate a continuous flow engine in a specified position,
wherein the continuous flow engine skid component contains a matrix material,
wherein the matrix material contains a nonmetal inorganic or organic matrix,
**characterized by** that the matrix material is a concrete material, a gypsum material, a geopolymer material, or an organic matrix material containing at least an inorganic or organic filler.

2. Continuous flow engine skid component according to claim 1, wherein the continuous flow engine skid component is consisting of a matrix material.

3. Continuous flow engine skid component according to any of the proceeding claims, wherein the continuous flow engine skid component is a skid adapted to fixate a continuous flow engine in a specified position.

4. Continuous flow engine skid component according to any of the proceeding claims, wherein the continuous flow engine skid component is a mounting element, a cover, a noise protection, and/or an air inlet.

5. Continuous flow engine skid component according to any of the proceeding claims, wherein the matrix material contains an additive material like wood based material.

6. Continuous flow engine skid component according to any of the proceeding claims, wherein the matrix material contains a functional additive material,
wherein the functional additive material is a reinforcement material.

7. Continuous flow engine skid component according to any of the proceeding claims, wherein the continuous flow engine is a gas continuous flow engine.

8. Continuous flow engine skid containing or consisting of a continuous flow engine skid component according to any of claims 1 to 7.

9. Method of manufacturing a continuous flow engine skid component according to any of claims 1 to 7, wherein the continuous flow engine skid component is part of a continuous flow engine skid or is adapted to be part of a continuous flow engine skid,
wherein the continuous flow engine skid is adapted to fixate a continuous flow engine in a specified position,
wherein the continuous flow engine skid component contains a matrix material,
wherein the matrix material contains an nonmetal inorganic or organic matrix,
wherein the method of manufacturing contains 3D printing matrix material,
**characterized by** that the matrix material is a concrete material, a gypsum material, a geopolymer material, or an organic matrix material containing at least an inorganic or organic filler.

10. Method according to claim 9, wherein the method contains 3D printing a skid adapted to fixate a continuous flow engine in a specified position.

11. Method according to any of the claims 9 to 10, wherein the method contains changing the matrix material during the 3D printing.

12. Method according to claim 11, wherein a relative amount of an additive material like a functional additive material is changed during the 3D printing.

13. Use of 3D printing concrete material to manufacture a continuous flow engine skid component according to any of claims 1 to 7.

14. Computer program product, tangibly embodied in a machine-readable storage medium, including instructions operable to cause a computing entity to provide manufacturing instructions for a 3D matrix printing device to manufacture a continuous flow engine skid component according to any of claims 1 to 7,
wherein the computer program product adapts the continuous flow engine skid component according to the specific utilization of the continuous flow engine.

## Patentansprüche

1. Gestellkomponente für Motoren mit kontinuierlicher Strömung,
wobei die Gestellkomponente für Motoren mit kontinuierlicher Strömung Teil eines Gestells für Motoren mit kontinuierlicher Strömung ist oder dazu ausgelegt ist, Teil eines Gestells für Motoren mit kontinuierlicher Strömung zu sein,
wobei das Gestell für Motoren mit kontinuierlicher Strömung dazu ausgelegt ist, einen Motor mit kontinuierlicher Strömung in einer festgelegten Position zu fixieren,
wobei die Gestellkomponente für Motoren mit kontinuierlicher Strömung ein Matrixmaterial enthält,
wobei das Matrixmaterial eine nicht metallische anorganische oder organische Matrix enthält,
**dadurch gekennzeichnet, dass** das Matrixmaterial ein Betonmaterial, ein Gipsmaterial, ein Geopolymermaterial oder ein organisches Matrixmaterial, das mindestens einen anorganischen oder organischen Füllstoff enthält, ist.

2. Gestellkomponente für Motoren mit kontinuierlicher Strömung nach Anspruch 1, wobei die Gestellkomponente für Motoren mit kontinuierlicher Strömung aus einem Matrixmaterial besteht.

3. Gestellkomponente für Motoren mit kontinuierlicher Strömung nach einem der vorhergehenden Ansprüche, wobei die Gestellkomponente für Motoren mit kontinuierlicher Strömung ein Gestell ist, das dazu ausgelegt ist, einen Motor mit kontinuierlicher Strömung in einer festgelegten Position zu fixieren.

4. Gestellkomponente für Motoren mit kontinuierlicher Strömung nach einem der vorhergehenden Ansprüche, wobei die Gestellkomponente für Motoren mit kontinuierlicher Strömung ein Montageelement, eine Abdeckung, ein Lärmschutz und/oder ein Lufteinlass ist.

5. Gestellkomponente für Motoren mit kontinuierlicher Strömung nach einem der vorhergehenden Ansprüche, wobei das Matrixmaterial ein additives Material wie Material auf Holzbasis enthält.

6. Gestellkomponente für Motoren mit kontinuierlicher Strömung nach einem der vorhergehenden Ansprüche, wobei das Matrixmaterial ein funktionales additives Material enthält, wobei das funktionale additive Material ein Verstärkungsmaterial ist.

7. Gestellkomponente für Motoren mit kontinuierlicher Strömung nach einem der vorhergehenden Ansprüche, wobei der Motor mit kontinuierlicher Strömung ein Motor mit kontinuierlicher Gasströmung ist.

8. Gestell für Motoren mit kontinuierlicher Strömung, das eine Gestellkomponente für Motoren mit kontinuierlicher Strömung nach einem der Ansprüche 1 bis 7 enthält oder daraus besteht.

9. Verfahren zur Herstellung einer Gestellkomponente für Motoren mit kontinuierlicher Strömung nach einem der Ansprüche 1 bis 7, wobei die Gestellkomponente für Motoren mit kontinuierlicher Strömung Teil eines Gestells für Motoren mit kontinuierlicher Strömung ist oder dazu ausgelegt ist, Teil eines Gestells für Motoren mit kontinuierlicher Strömung zu sein,
wobei das Gestell für Motoren mit kontinuierlicher Strömung dazu ausgelegt ist, einen Motor mit kontinuierlicher Strömung in einer festgelegten Position zu fixieren,
wobei die Gestellkomponente für Motoren mit kontinuierlicher Strömung ein Matrixmaterial enthält,
wobei das Matrixmaterial eine nicht metallische anorganische oder organische Matrix enthält,
wobei das Herstellungsverfahren ein 3D-Druckmatrixmaterial enthält,
**dadurch gekennzeichnet, dass** das Matrixmaterial ein Betonmaterial, ein Gipsmaterial, ein Geopolymermaterial oder ein organisches Matrixmaterial, das mindestens einen anorganischen oder organischen Füllstoff enthält, ist.

10. Verfahren nach Anspruch 9, wobei das Verfahren 3D-Drucken eines Gestells enthält, das dazu ausgelegt ist, einen Motor mit kontinuierlicher Strömung in einer festgelegten Position zu fixieren.

11. Verfahren nach einem der Ansprüche 9 bis 10, wobei das Verfahren Ändern des Matrixmaterials während des 3D-Druckens enthält.

12. Verfahren nach Anspruch 11, wobei eine relative Menge eines additiven Materials wie ein funktionelles additives Material während des 3D-Druckens geändert wird.

13. Verwendung von 3D-Druck-Betonmaterial zum Herstellen einer Gestellkomponente für Motoren mit kontinuierlicher Strömung nach einem der Ansprüche 1 bis 7.

14. Computerprogrammprodukt, das physisch in einem maschinenlesbaren Speichermedium verkörpert ist und Anweisungen beinhaltet, die dazu betreibbar sind, eine Rechenentität dazu zu veranlassen, einer 3D-Matrixdruckvorrichtung Herstellungsanweisungen zum Herstellen einer Gestellkomponente für Motoren mit kontinuierlicher Strömung nach einem der Ansprüche 1 bis 7 bereitzustellen,
wobei das Computerprogrammprodukt die Gestellkomponente für Motoren mit kontinuierlicher Strömung an die spezifische Nutzung des Motors mit kontinuierlicher Strömung anpasst.

## Revendications

1. Composant de patin de moteur à flux continu,
dans lequel le composant de patin de moteur à flux continu fait partie d'un patin de moteur à flux continu ou est adapté pour faire partie d'un patin de moteur à flux continu,
dans lequel le patin de moteur à flux continu est adapté pour fixer un moteur à flux continu dans une position spécifiée, dans lequel le composant de patin de moteur à flux continu contient un matériau de matrice,
dans lequel le matériau de matrice contient une matrice inorganique ou organique non métallique,
**caractérisé en ce que** le matériau de matrice est un matériau en béton, un matériau en gypse, un matériau géopolymère ou un matériau de matrice organique contenant au moins une charge inorganique ou organique.

2. Composant de patin de moteur à flux continu selon la revendication 1, dans lequel le composant de patin de moteur à flux continu est constitué d'un matériau de matrice.

3. Composant de patin de moteur à flux continu selon l'une quelconque des revendications précédentes, dans lequel le composant de patin de moteur à flux continu est un patin adapté pour fixer un moteur à flux continu dans une position spécifiée.

4. Composant de patin de moteur à flux continu selon l'une quelconque des revendications précédentes, dans lequel le composant de patin de moteur à flux continu est un élément de montage, un couvercle, une protection contre le bruit et/ou une entrée d'air.

5. Composant de patin de moteur à flux continu selon l'une quelconque des revendications précédentes, dans lequel le matériau de matrice contient un matériau additif tel qu'un matériau à base de bois.

6. Composant de patin de moteur à flux continu selon l'une quelconque des revendications précédentes, dans lequel le matériau de matrice contient un matériau additif fonctionnel, le matériau additif fonctionnel étant un matériau de renforcement.

7. Composant de patin de moteur à flux continu selon l'une quelconque des revendications précédentes, dans lequel le moteur à flux continu est un moteur à flux continu à gaz.

8. Patin de moteur à flux continu contenant ou constitué d'un composant de patin de moteur à flux continu selon l'une quelconque des revendications 1 à 7.

9. Procédé de fabrication d'un composant de patin de moteur à flux continu selon l'une quelconque des revendications 1 à 7, dans lequel le composant de patin de moteur à flux continu fait partie d'un patin de moteur à flux continu ou est adapté pour faire partie d'un patin de moteur à flux continu,
dans lequel le patin de moteur à flux continu est adapté pour fixer un moteur à flux continu dans une position spécifiée, dans lequel le composant de patin de moteur à flux continu contient un matériau de matrice,
dans lequel le matériau de matrice contient une matrice inorganique ou organique non métallique,
dans lequel le procédé de fabrication contient un matériau de matrice d'impression 3D,
**caractérisé en ce que** le matériau de matrice est un matériau en béton, un matériau en gypse, un matériau géopolymère ou un matériau de matrice organique contenant au moins une charge inorganique ou organique.

10. Procédé selon la revendication 9, dans lequel le procédé comprend l'impression 3D d'un patin adapté pour fixer un moteur à flux continu dans une position spécifiée.

11. Procédé selon l'une quelconque des revendications 9 à 10, dans lequel le procédé comprend le changement du matériau de la matrice pendant l'impression 3D.

12. Procédé selon la revendication 11, dans lequel une quantité relative d'un matériau additif tel qu'un matériau additif fonctionnel est modifiée pendant l'impression 3D.

13. Utilisation d'un matériau en béton d'impression 3D pour fabriquer un composant de patin de moteur à flux continu selon l'une quelconque des revendications 1 à 7.

14. Produit de programme informatique, incorporé de manière tangible dans un support de stockage lisible par machine, comprenant des instructions pouvant être utilisées pour amener une entité informatique à fournir des instructions de fabrication pour un dispositif d'impression de matrice 3D afin de fabriquer un composant de patin de moteur à flux continu selon l'une quelconque des revendications 1 à 7,
dans lequel le produit de programme informatique adapte le composant de patin de moteur à flux continu en fonction de l'utilisation spécifique du moteur à flux continu.
